# EUROPÄISCHE PATENTSCHRIFT

(11) **EP 0 842 740 B1**
(45) Veröffentlichungstag und Bekanntmachung des Hinweises auf die Patenterteilung: **17.04.2002**
(21) Anmeldenummer: 97203500.0
(22) Anmeldetag: 11.11.1997
(51) Int. Cl.: B24D 3/06, B24D 5/16, B24D 5/12, B28D 1/12, B24D 3/34

(54) **Steintrennschleifwerkzeug mit Verbundträgerkörper**
Stone parting tool with composite support
Outil à fendre la pierre avec support composite

(30) Priorität: 15.11.1996 AT 200096
(43) Veröffentlichungstag der Anmeldung: 20.05.1998
(73) Patentinhaber: Tyrolit Schleifmittelwerke Swarovski KG, 6130 Schwaz (AT)
(72) Erfinder: Prantl, Herbert, 6130 Schwaz (AT); Wentz, Werner, 6130 Schwaz (AT)
(74) Vertreter: Hofinger, Engelbert, Dr.Dr.

(56) Entgegenhaltungen:
- US-A- 4 689 919
- US-A- 4 718 398
- PATENT ABSTRACTS OF JAPAN vol. 008, no. 227 (M-332), 18. Oktober 1984 & JP 59 107860 A (TOUHOU SEIMITSU KK), 22. Juni 1984

## Beschreibung

Die Erfindung betrifft ein schallgedämmtes Steintrennschleifwerkzeug, der im Oberbegriff des Anspruchs **1** angegebenen Art.

Schnellaufende Steintrennschleifwerkzeuge sind als gesundheitsgefährdende Schallquellen bekannt. Eine der bekanntesten Maßnahmen gegen übermäßige Schallabstrahlung ist der mehrschichtige Aufbau des Trägerkörpers von solchen Werkzeugen, der auch Kern oder Stammblatt genannt wird.

Das Gebrauchsmuster AT 000213 U1 zeigt eine verklebte Ausführungsform eines schallgedämmten Verbundträgerkörpers mit zwei kongruenten Ronden. Zwischen den Ronden befindet sich im Zentralbereich des Verbundträgerkörpers innerhalb eines Durchmessers, der durch den Grund der umfangseitigen Entspannungsöffnungen gebildet wird, eine Klebstoffschicht von 0,1 bis 0,5 mm Dicke. Diese Ausführung hat den Nachteil, daß eine Spaltöffnung zwischen den beiden Ronden im Bereich der Außenzone des Verbundträgerkörpers bleibt, welche die sichere, wiederholbare Verlötung von Schneidelementen mit dem Verbundträgerkörper behindert.

Die DE 2746192 B2 und die EP 0191339 A2 zeigen Lösungen mit teilweiser, konzentrischer Überdeckung der Trägerronde durch eine im Durchmesser kleinere Deckronde mit dazwischen angeordneter elastischer Dämmfolie. Diese Lösungen sind wegen der aufwendigen Herstellung zu teuer, obwohl aufgrund der geschlossenen Umfangsfläche des Verbundträgerkörpers im Bereich des Lötkontaktes mit den Schneidelementen keine Probleme bei der sicheren, wiederholbaren Verlötung von Schneidkranz und Verbundträgerkörper zu erwarten sind.

Weitere Ausführungen nach dem Stand der Technik von Kreissägewerkzeugen mit Verbundträgerkörper umfassen Lösungen, bei denen ringförmige Stützelemente in eine Ausnehmung eines Tragteils des Trägerkörpers eingelegt und durch Nieten, Schrauben und/oder Verkleben daran befestigt sind wie im Gebrauchsmuster DE 7920251 U1 vorgeschlagen. Sofern es sich dabei um Ausführungen mit geschlossener Umfangsfläche des Verbundträgerkörpers handelt, ist zwar die sichere, wiederholbare Verlötung mit dem Schneidelement gewährleistet, aber die Herstellkosten derartiger Verbundträgerkörper sind wegen der erforderlichen Herstellung der Ausnehmung und der Befestigungsbohrungen durch zerspanende Bearbeitung meist zu hoch. Darüberhinaus sind Lösungen mit eingelegten Ringen im Stammblatt hinsichtlich Geräuschdämmung nicht optimal, da die Entkoppelung von Trägerkörper und Stützring durch eine Zwischenschicht relativ geringe Teilbereiche des Trägerkörpers umfaßt.

Von verschiedenen Herstellern (z.B. Edessö-Werk, Typ Silencio) erhältlich sind schallgedämmte Verbundträgerkörper, die als Medium für die Schwingungsentkoppelung zwischen zwei deckungsgleichen Stahlronden eine Kupferronde vorsehen. Zur axialen Befestigung des Verbundes ist kostengünstiges Punktschweißen vorgesehen, wobei die Zahl und Lage der Schweißpunkte mit Rücksicht auf die beabsichtigte Schalldämmung eng begrenzt bleiben muß. Diese Lösung hat neben dem Vorteil einer wirksamen Schalldämmung infolge der Mehrschichtigkeit des Verbundes bis an den Außenumfang des Verbundträgerkörpers sowie die günstigen Herstellkosten den Nachteil einer durch die Dämmschicht unterbrochenen Außenumfangsfläche, was für die dauerhafte und sichere Befestigung der Schneidelemente durch Hartlöten von erheblich störendem Einfluß sein kann.

Ein schallgedämmtes Steintrennschleifwerkzeug der eingangs genannten Art beschreibt die JP 59 107860 A . Der Trägerkörper dieses schallgedämmten Steintrennschleifwerkzeugs besteht aus zwei deckungsgleichen Stahlronden, welche schwingungstechnisch entkoppelt sind durch eine dazwischenliegend vorgesehene deckungsgleiche Ronde aus einem Stoff mit unterschiedlichem Elastizitätsmodul. Als bevorzugter Stoff wird Kupfer angegeben. Diese Dämpfungsronde ist über beidseitige, thermisch reagierende Bindungslagen mit den seitlichen Stahlronden verbunden. An der Außenumfangsfläche des mehrlagigen Trägerkörpers sind die metallgebundenen Schleifkörper befesttigt.
Bei der Wiederbestückung von Trägerkörpern dieser Bauart mit metallgebundenen Schleifkörpern können die Stahlronden auseinanderklaffen, sodaß die Wiederbestückung zu einem sicher und dauerhaft einsetzbaren Steintrennschleifwerkzeug nicht mehr möglich ist.

Aufgabe der Erfindung ist es, ein Kreissägewerkzeug mit schwingungsgedämmtem Verbundträgerkörper der eingangs beschriebenen Art so zu verbessern, daß bei größtmöglicher Schalldämmung und geringen Kosten für den Trägerkörper eine sichere, dauerhafte und wiederholbare Verlötung von Schneidbelag und Trägerkörper möglich ist.

Gelöst wird diese Aufgabe durch die Kennzeichnenden Merkmale des Anspruchs 1. Vorteilhafte Weiterbildungen der Erfindung sind durch die abhängigen Ansprüche gekennzeichnet. Der erfindungsgemäß vorgesehene Verbundträgerkörper weist in seiner äußeren Randzone im Nahbereich der Kontaktfläche von Verbundträgerkörper und Schneidkranz eine umfangsgeschlossene, konturfolgende und den Verbundträgerkörper abdichtende Verschweißung auf. Diese Verschweißung erfolgt vorzugsweise vor der ersten Bestückung des Verbundträgerkörpers mit Schneidelementen durch Hartlöten. Die umfangsgeschlossene Schweißnaht befindet sich dabei vorzugsweise unmittelbar nahe bei der Außenumfangsfläche des Verbundträgerkörpers und kann auch bei Verwendung von Trägerkörpern mit Entspannungsöffnungen in der Umfangszone deren Kontur folgen, so daß auch bei teilweise umfangsoffenen Kreissägewerkzeugen eine vollkommene Abdichtung des Verbundträgerkörpers gegenüber den Umgebungsmedien erzielbar ist.

Für die erfindungsgemäße Herstellung der Schweißnaht eignen sich im Prinzip alle bekannten Schweißverfahren. Bevorzugt ausführbar ist der Erfindungsgedanke durch Schweißverfahren, welche ohne Zusatzwerkstoff in der Randzone seitlich unmittelbar nahe bei der Außenkontur des Verbundträgerkörpers zum Einsatz gebracht werden können, wie z.B. Laserstrahl-, oder Elektronenstrahlschweißen.

Die Erfindung kann auch ausgeführt werden durch radiales Verschweißen der Verbundträgerkörperbestandteile an deren Außenumfangsfläche. Allerdings kann bei dieser Ausführungsform der Erfindung ein zusätzlicher Arbeitsgang vonnöten sein, zur Wiederherstellung einer einwandfreien Oberflächengeometrie an der Außenumfangsfläche des Verbundträgerkörpers, damit die problemlose Verlötung der Schneidelemente sichergestellt ist.

Bei einer erfindungsgemäßen Verschweißung durch Laserstrahlschweißen wird eine störende Beeinflussung von Geometrie und Oberflächenbeschaffenheit des Verbundträgerkörpers wirksam verhindert, sodaß die Verlötung der Schneidelemente ohne jede weitere Nacharbeit des Verbundträgerkörpers erfolgen kann. Lediglich im außenkonturnahen Bereich kann seitlich die Schweißung optisch wahrnehmbar sein. Im metallurgischen Schliff erfindungsgemäß verschweißter Verbundträgerkörper ist die Verbindung zwischen den Teilronden über aufgeschmolzene Brücken erkennbar. Diese dauerhafte Kontaktbrücke entsteht insbesondere bei Verwendung des Laserstrahlschweißens unabhängig von der Art des Dämmwerkstoffs zwischen den Metallronden des Verbundträgerkörpers. Die Lage des Schalldämmaterials zwischen den Metallronden ist dabei nach der energiereichen und fokussierten Laserstrahlschweißung über Kontaktbrücken so fixiert, daß selbst wiederholte nachfolgende Bestückung des Verbundträgerkörpers mit Schneidelementen durch Hartlöten keinerlei Maßänderung, insbesonders keinerlei axiales Auseinanderklaffen der äußeren Verbundträgerkörperränder hervorruft.

Eine erfindungsgemäße Schweißung erzeugt in einem aus mehreren Ronden bestehenden, beispielsweise durch Punktschweißen vorverbundenen Trägerkörper einen umfangsgeschlossenen, dichten Abschluß gegenüber dem korrosiven Umgebungsmedium im Einsatz des Werkzeuges. Die Schweißung kann dabei mittels bekannter numerischer Steuerung einer Schweißmaschine konturfolgend ausgeführt werden.

Eine erfindungsgemäße Verschweißung verhindert die Folgen von Korrosion und Abrasion im Bereich der Hartverlötung der Schneidelemente mit dem Verbundträgerkörper. Die für die nachfolgende Hartlötung vorgesehene Kontaktfläche bleibt insbesondere bei Verwendung des Laserschweißens von der Schweißung unbeeinflußt. Nach Praxiseinsätzen von Steintrennschleifwerkzeugen mit Verbundträgerkörpern nach dem Stand der Technik haben sich dagegen voneinander abhängige Korrosions- und Verschleißerscheinungen im Bereich der Verlötung gezeigt mit der Folge von vorzeitigem Ablösen von Schneidelementen und mit dem erheblichen Nachteil des axialen Auseinanderklaffens der Ronden des Verbundträgerkörpers. Derart geschädigte Verbundträgerkörper nach dem Stand der Technik können nicht ohne Sicherheitsrisiken und zusätzliche teure Arbeitsgänge wiederbestückt werden. Dieses Problem konnte durch Verteilung und Erhöhung der Zahl der Punktschweißungen nicht gelöst werden, ohne spürbare Verminderung der Schalldämmwirkung des Steintrennschleifwerkzeugs.

Erfindungsgemäße Verschweißung des Verbundträgerkörpers sichert dagegen die einwandfreie, geometrisch exakte Wiederbestückbarkeit und damit Weiterverwendung des teuren Verbundträgerkörpers zu wiederholten Malen. Dabei kann ein Verbundträgerkörper mit jeder Art von Schalldämmschicht zwischen den seitlichen Ronden, aber auch mit bloßem seitlichen Anliegen der Ronden ohne Schalldämmschicht, erfindungsgemäß verschweißt werden. Die vorliegende Erfindung zeigt somit einen überraschend einfachen Weg auf zur spürbaren Verbesserung von schallgedämmten Steintrennschleifwerkzeugen vornehmlich für den Naßeinsatz auf Natur- und Kunststein.

Die vorgeschlagene Verbesserung wirkt sich positiv aus auf die Personensicherheit im Betrieb des Werkzeugs, auf die Steigerungsmöglichkeit von die Schnittleistung bestimmenden Einstellwerten an der Anlage und auf die Verlängerungsmöglichkeit der Standzeit der Werkzeuge bei gleicher Schalldämmwirkung.

Die Erfindung ist nachstehend anhand von in der Zeichnung dargestellten Ausführungsbeispielen und anhand von metallurgischen Schliffbildern erläutert.

Es zeigen:
Fig. 1 einen radialen, metallurgischen Querschliff durch ein Kreissägewerkzeug nach dem Stand der Technik;
Fig. 2 einen radialen, metallurgischen Querschliff durch ein erfindungsgemäßes Kreissägewerkzeug und
Fig. 3 die Seitenansicht von erfindungsgemäßen Ausführungsbeispielen von Kreissägewerkzeugen in Prinzipdarstellung.

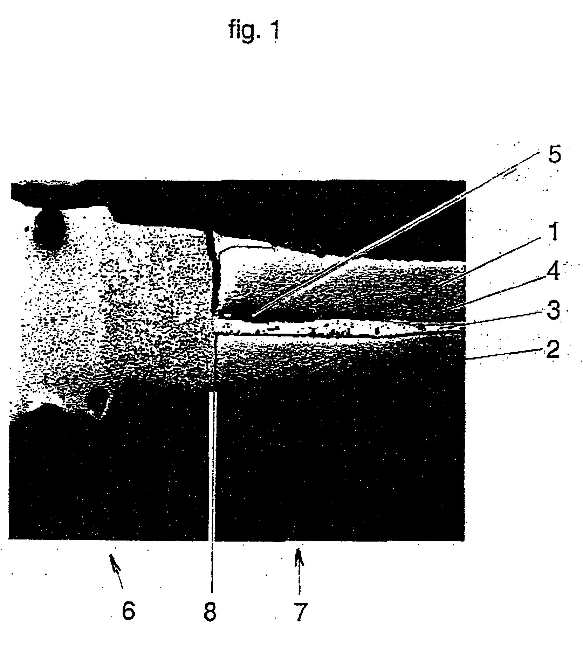

In Fig. 1 ist axiales Auseinanderklaffen der randzonennahen Bereiche eines Verbundträgerkörpers nach dem Stand der Technik infolge Ablösung einer Stahlronde (1) von der Kupferdämmschicht (3) gut zu erkennen. Korrosionsangriff hat sowohl von der Stahlronde (1) als auch von der Kupferdämmschicht (3) erhebliche Materialmengen abgetragen. Der entstandene Hohlraum (5) begünstigt die weiter fortschreitende Ausbreitung eines Spaltes (4), der wiederum das Eindringen des korrosiven Mediums ermöglicht. Das Schneidelement (6) ist im Bereich der metallurgisch geprüften Zone gemäß dargestelltem Schliffbild in Fig. 1 nur noch einseitig an der Stahlronde (2) fest verbunden, während die Stahlronde (1) keine Verbindung mit dem Schneidelement (6) aufweist.

Ein Verbundträgerkörper nach dem Stand der Technik laut Fig. 1 ist durch axiale Aufklaffung so nicht mehr ordnungsgemäß wiederverwendbar.

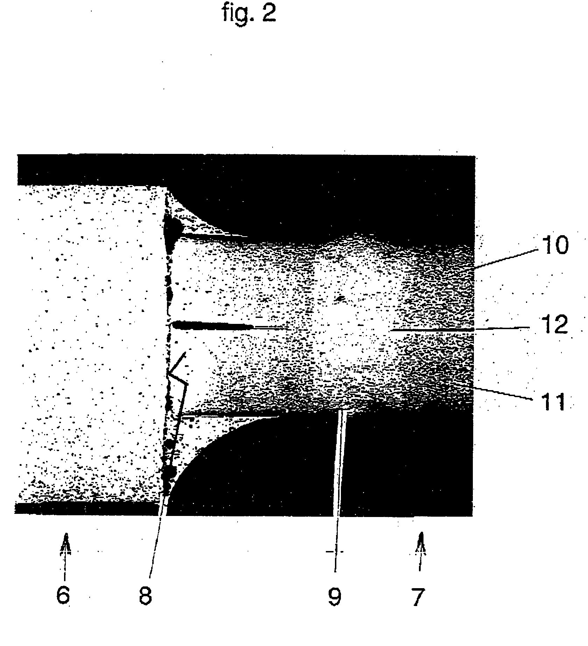

Fig. 2 zeigt den gleich wie in Fig. 1 angeordneten metallurgischen Schliff eines erfindungsgemäßen Kreissägewerkzeugs, der im Bereich der äußeren Randzone (16) des Verbundträgerkörpers (7) radial verläuft. Die Schweißnaht (9) verbindet die beiden Stahlronden (10, 11) auf massive Weise, sodaß Eindringen von korrosivern Schleifschlamm in zentraler Richtung zwischen den Stahlronden (10, 11) wirksam verhindert ist Aufgrund des geringen radialen Abstandes zwischen Schweißnaht (9) und Außenumfangsfläche (8) des Verbundträgerkörpers (7) ist die Schalldämmwirkung nicht spürbar beeinträchtigt.

Bei dem erfindungsgemäßen Ausführungsbeispiel nach Fig. 2 ist die festigkeitsmäßige Voraussetzung für den Betrieb des Werkzeuges und für wiederholte Wiederbestückungen gleichermaßen gegeben wie sonst nur bei einem massiven, nicht schallgedämmten Trennwerkzeug.

Im erfindungsgemäßen Beispiel laut Fig. 2 ist gut erkennbar, daß die trennende Schalldämmfolie (12) im Bereich der Schweißnaht (9), durch Aufschmelzung im Werkstoff der Ronden (10, 11) verschwunden ist.

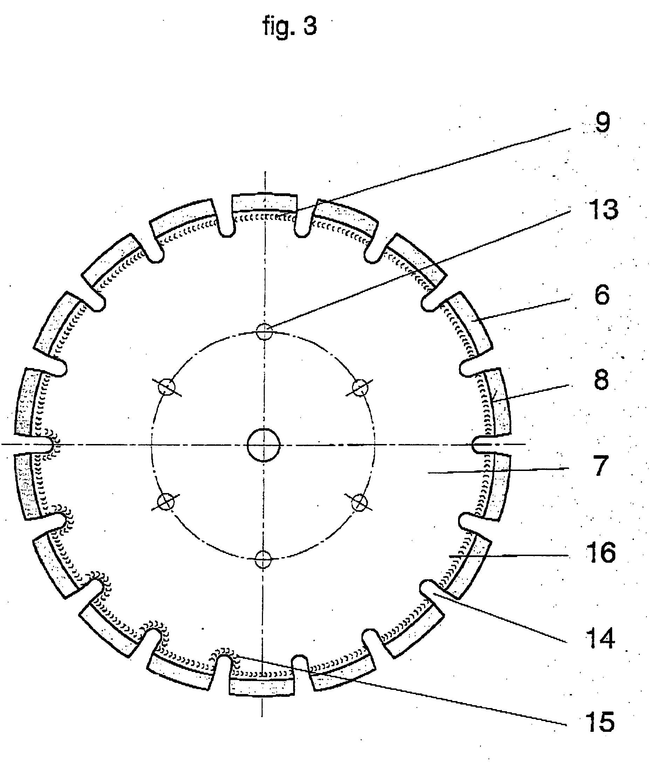

Fig. 3 zeigt eine prinzipielle Seitenansicht von Ausführungsbeispielen der Erfindung. Die Schweißpunkte (13) sind zum seitlichen Heften der deckungsgleichen Stahlronden (10, 11) mit dazwischenliegender Kupferfolie als Schalldämmschicht (12) vom Hersteller des Verbundträgerkörpers (7) vorgesehen. Die Schweißnaht (9, 15) kann nach einem Ausführungsbeispiel der Erfindung der Außenumfangsfläche (8) und der Entspannungsöffnung (14) konturnahe folgen. Die Schweißnaht (9) kann nach einem anderen Ausführungsbeispiel der Erfindung der Außenumfangsfläche (8) konturnahe folgen.

### Liste der verwendeten Bezugszeichen

- 1: Stahlronde
- 2: Stahlronde
- 3: Schalldämmschicht
- 4: Spalt
- 5: Hohlraum
- 6: Schneidelement
- 7: Verbundträgerkörper
- 8: Außenumfangsfläche des Verbundträgerkörpers (7)
- 9: Schweißnaht
- 10: Stahlronde
- 11: Stahlronde
- 12: Schalldämmschicht
- 13: Schweißpunkt
- 14: Entspannungsöffnung
- 15: Schweißnaht, die Entspannungsöffnung (14) umfassend
- 16: Äußere Randzone

## Patentansprüche

1. Schallgedämmtes Steintrennschleifwerkzeug mit einem aus mehreren Metallronden (10, 11) axial zusammengesetzten Verbundträgerkörper (7), wobei zwischen den Metallronden (10, 11) eine Schalldämmschicht (12) aus Klebstoff und/oder Metall angeordnet sein kann, welche die äußere Randzone (16) überdecken oder aussparen kann und mit an der Außenumfangsfläche (8) des Verbundträgerkörpers (7) befestigten, einen geschlossenen oder offenen Schneidkranz bildenden Schneidelementen (6), die aus Schleifkorn, Sintermetallbindung und gegebenenfalls Füllstoff bestehen, **gekennzeichnet durch**
eine in der äußeren Randzone (16) des Verbundträgerkörpers (7) verlaufende, der Außenkontur des Verbundträgerkörpers (7) folgende, die Metallronden (10, 11) und gegebenenfalls die dazwischenliegende Schalldämmschicht (12) fest verbindende und abdichtende Schweißnaht (9, 15).

2. Schallgedämmtes Steintrennschleifwerkzeug nach Anspruch 1, **gekennzeichnet dadurch, daß** die Schweißnaht (9, 15) seitlich unmittelbar nahe bei der Außenkontur im Verbundträgerkörper (7) verläuft.

3. Schallgedämmtes Steintrennschleifwerkzeug nach Anspruch 1, **gekennzeichnet dadurch, daß** die Schweißnaht radial zwischen den Metallronden (10, 11) des Verbundträgerkörpers (7) an deren Außenumfangsfläche verläuft.

4. Schallgedämmtes Steintrennschleifwerkzeug nach einem der Ansprüche 1 bis 3, **gekennzeichnet dadurch, daß** die Schweißnaht entlang der Außenumfangsfläche (8) verläuft.

5. Schallgedämmtes Steintrennschleifwerkzeug nach einem der Ansprüche 1 bis 3, **gekennzeichnet dadurch, daß** die Schweißnaht entlang der Außenumfangsfläche (8) und entlang der Kontur der Entspannungsöffnungen (14) verläuft.

6. Schallgedämmtes Steintrennschleifwerkzeug nach einem der vorhergehenden Ansprüche , **gekennzeichnet dadurch, daß** die Schweißnaht (9, 15) ohne Zufuhr von Schweißzusatzwerkstoff durch Laserstrahlschweißen ausgeführt ist.

## Claims

1. A sound-insulated stone cutting grinding tool comprising a composite carrier body (7) which is axially composed of a plurality of metal discs (10, 11), wherein a sound insulating layer (12) of adhesive and/or metal can be arranged between the metal discs (10, 11), which sound insulating layer can cover over or cut out the outer edge zone (16), and cutting elements (6) which are secured to the outside peripheral surface (8) of the composite carrier body (7) and which form a closed or open cutting ring and which comprise abrasive grain, sintered metal binding and optionally filler, **characterised by**
a weld seam (9, 15) which extends in the outer edge zone (16) of the composite carrier body (7) and which follows the outside contour of the composite carrier body (7) and which fixedly joins and seals the metal discs (10, 11) and optionally the sound insulating layer (12) disposed therebetween.

2. A sound-insulated stone cutting grinding tool according to claim 1 **characterised in that** the weld seam (9, 15) extends laterally immediately adjacent to the outside contour in the composite carrier body (7).

3. A sound-insulated stone cutting grinding tool according to claim 1 **characterised in that** the weld seam extends radially between the metal discs (10, 11) of the composite carrier body (7) at the outside peripheral surface thereof.

4. A sound-insulated stone cutting grinding tool according to one of claims 1 to 3 **characterised in that** the weld seam extends along the outside peripheral surface (8).

5. A sound-insulated stone cutting grinding tool according to one of claims 1 to 3 **characterised in that** the weld seam extends along the outside peripheral surface (8) and along the contour of the stress-relief openings (14).

6. A sound-insulated stone cutting grinding tool according to one of the preceding claims **characterised in that** the weld seam (9, 15) is executed without the feed of welding additive by laser beam welding.

## Revendications

1. Outil insonorisé à fendre et tailler la pierre avec un corps de support composite (7) consistant en plusieurs flans métalliques (10, 11) assemblés axialement, une couche insonorisante (12) en colle et/ou en métal pouvant être disposée entre les flans métalliques (10, 11), pouvant recouvrir ou découvrir la zone marginale extérieure (16) et avec des éléments de coupe (6) constituant une couronne de coupe ouverte ou fermée, fixés à la surface périphérique extérieure (8) du corps de support composite (7), consistant en grains abrasifs, en une matrice de métal fritté et, le cas échéant, en produits de remplissage, **caractérisé par** un cordon de soudure (9, 15) dans la zone marginale extérieure (16) du corps de support composite (7), suivant le contour extérieur du corps de support composite (7), assemblant de manière fixe et rendant étanche les flans métalliques (10, 11) et, le cas échéant, la couche insonorisante (12) disposée entre eux.

2. Outil insonorisé à fendre et tailler la pierre selon la revendication 1, **caractérisé en ce que** le tracé du cordon de soudure (9, 15) est latéral, au voisinage immédiat du contour extérieur dans le corps de support composite (7).

3. Outil insonorisé à fendre et tailler la pierre selon la revendication 1, **caractérisé en ce que** le tracé du cordon de soudure est radial entre les flans métalliques (10, 11) du corps de support composite (7) au niveau de leur surface périphérique extérieure.

4. Outil insonorisé à fendre et tailler la pierre selon une des revendications 1 à 3, **caractérisé en ce que** le cordon de soudure est pratiqué le long de la surface périphérique extérieure (8).

5. Outil insonorisé à fendre et tailler la pierre selon l'une quelconque des revendications 1 à 3, **caractérisé en ce que** le cordon de soudure s'étend le long de la surface périphérique extérieure (8) et le long du contour des ouvertures de détente (14).

6. Outil insonorisé à fendre et tailler la pierre selon l'une quelconque des revendications précédentes, **caractérisé en ce que** le cordon de soudure (9, 15) est réalisé au laser sans matériau d'apport.
